# FASCICULE DE BREVET EUROPEEN

(11) **EP 2 509 779 B1**
(45) Date de publication et mention de la délivrance du brevet: **02.04.2014**
(21) Numéro de dépôt: 10807460.0
(22) Date de dépôt: 07.12.2010
(51) Int. Cl.: B29D 30/48

(54) **PROCEDE ET PRESSE DE FABRICATION D'UNE TRINGLE DESTINEE A LA REALISATION D'UN PNEUMATIQUE**
VERFAHREN UND PRESSE ZUR HERSTELLUNG EINES WULSTRINGS FÜR REIFEN
METHOD AND PRESS FOR MANUFACTURING A BEAD RING FOR A TIRE

(30) Priorité: 09.12.2009 FR 0958805
(43) Date de publication de la demande: 17.10.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: SOUBRIER, Jean-Claude, F-63540 Romagnat (FR)
(74) Mandataire: Lasson, Cédric Y. M.
(86) Numéro de dépôt international: PCT/FR2010/052636
(87) Numéro de publication internationale: WO 2011/070291

(56) Documents cités:
- GB-A- 1 163 108
- US-A- 1 463 868
- US-A- 4 450 025
- US-A- 4 496 411
- US-A- 4 561 919

## Description

L'invention concerne la fabrication des tringles destinées à la réalisation des pneumatiques de véhicule.

Les pneumatiques comprennent une tringle annulaire de renfort dans chaque bourrelet servant pour la fixation du pneumatique à la jante. Sur les poids lourds, cette tringle comprend une armature métallique à section transversale rectangulaire, revêtue de gomme pour faciliter la mise en forme de l'ébauche du pneumatique lors de sa fabrication. Ce revêtement est mis en place sur l'armature en suivant sa direction circonférentielle. Lorsque toute la longueur de l'armature a été revêtue, les deux extrémités circonférentielles du revêtement se superposent en formant une surépaisseur.

Or cette singularité géométrique génère des vibrations lorsque le véhicule roule de sorte qu'on cherche à l'éliminer. Pour cela, on peut envisager de presser la zone de recouvrement dans une presse entre deux mors. Mais ce pressage engendre un fluage entre les mors de la gomme formant le revêtement qui génère lui aussi des irrégularités géométriques, ainsi que des résidus de pressage.

Le document US 1463868 - A divulgue un procédé de fabrication d'une tringle destinée à la réalisation d'un pneumatique, la tringle comprenant un revêtement formant une zone de recouvrement sur lui-même selon une direction circonférentielle de la tringle, dans le quel procédé on presse la tringle au moyen d'un dispositif de pressage en contact avec tout un périmètre d'une section de la zone.

Un but de l'invention est d'améliorer le traitement des singularités géométriques des tringles comprenant un revêtement.

A cet effet, on prévoit selon l'invention un procédé comme défini dans la revendication 1, pour la fabrication d'une tringle destinée à la réalisation d'un pneumatique et comprenant un revêtement formant une zone de recouvrement sur lui-même selon une direction circonférentielle de la tringle, procédé dans lequel on presse la tringle au moyen d'au moins trois mors en contact avec tout un périmètre d'une section de la zone.

Ainsi, on maîtrise mieux le fluage du matériau de revêtement, ce qui améliore la régularité du profil de la tringle, le long de sa circonférence. Cela permet de réduire les vibrations ressenties dans le véhicule.

De préférence, le nombre de mors est d'au moins quatre.

On peut ainsi effectuer le pressage de la tringle entre chacun des deux couples de mors.

Avantageusement, on dispose la tringle sur l'un, inférieur, des mors.

De préférence, on presse tout d'abord la tringle au moyen de deux des mors opposés l'un à l'autre, de préférence des mors inférieur et supérieur, pendant qu'on maintient deux autres des mors, de préférence des mors latéraux, à distance de la tringle.

Ainsi, on améliore la maîtrise du fluage du matériau lors du pressage.

Avantageusement, après le pressage entre les deux mors opposés, on les immobilise par rapport à la tringle et on approche les deux autres mors de la tringle.

De préférence, après le pressage entre les deux mors opposés, on presse la tringle au moyen de tous les mors.

Avantageusement, lors du pressage, on réalise une marque sur la tringle, permettant de différencier l'une de l'autre deux faces axiales de la tringle.

Ainsi, lors du placement ultérieur des tringles au sein d'une ébauche crue de pneumatique, l'opérateur pourra facilement reconnaître chacune des deux faces axiales de chaque tringle pour les orienter convenablement au sein de l'ébauche.

Avantageusement, la tringle comprend une armature à section de forme polygonale.

De préférence, le revêtement comprend une couche de rembourrage et une couche d'habillage.

On prévoit également selon l'invention une presse comme définie dans la revendication 9, pour une tringle destinée à la réalisation d'un pneumatique, la presse comprenant au moins trois mors montés mobiles les uns par rapport aux autres et aptes à former entre eux une cavité à section fermée.

La presse selon l'invention pourra présenter en outre au moins l'une quelconque des caractéristiques suivantes:
- elle comprend un mors supérieur, un mors inférieur et deux mors latéraux ;
- elle comporte un équipage monté mobile par rapport à l'un des mors, de préférence un mors inférieur, et portant les autres mors ;
- au sein de l'équipage, deux des mors agencés pour presser la tringle entre eux, de préférence des mors latéraux, sont montés mobiles par rapport au troisième ;
- les mors sont montés mobiles à coulissement par rapport à un bâti de la presse, et la cavité a une section présentant un axe de symétrie principal incliné par rapport à des directions de coulissement des mors ;
- chaque mors est revêtu d'au moins une couche antiadhésive ; et
- la presse comprend des moyens de chauffage des mors. Des formes préférentielles de l'invention sont définies dans les revendications dépendantes.

D'autres caractéristiques et avantages de l'invention apparaîtront encore dans la description suivante d'un mode de réalisation donné à titre d'exemple non limitatif en référence aux dessins annexés sur lesquels :
- la figure 1 est une vue en coupe transversale montrant la section courante d'une tringle avant la mise en oeuvre du procédé de l'invention ;
- la figure 2 est une vue de la section du revêtement de la tringle de la figure 1 avant mise en place sur l'armature de cette dernière ;
- les figures 3 et 4 sont deux vues en élévation d'une presse selon l'invention respectivement à l'état ouvert et à l'état fermé ;
- les figures 5 et 6 sont des vues de face à plus grande échelle des mors de la presse respectivement en positions fermée et ouverte ;
- la figure 7 est une vue en perspective des mors de la figure 5 ;
- les figures 8 et 9 sont des vues respectivement de dessous et en coupe verticale du mors supérieur de la figure 5 ; et
- la figure 10 montre la forme de la section transversale de la tringle dans sa zone de recouvrement après mise en oeuvre du procédé.

On utilise dans la suite un repère orthogonal X, Y, Z dans lequel les directions X et Y sont horizontales et perpendiculaires entre elles tandis que la direction Z est verticale.

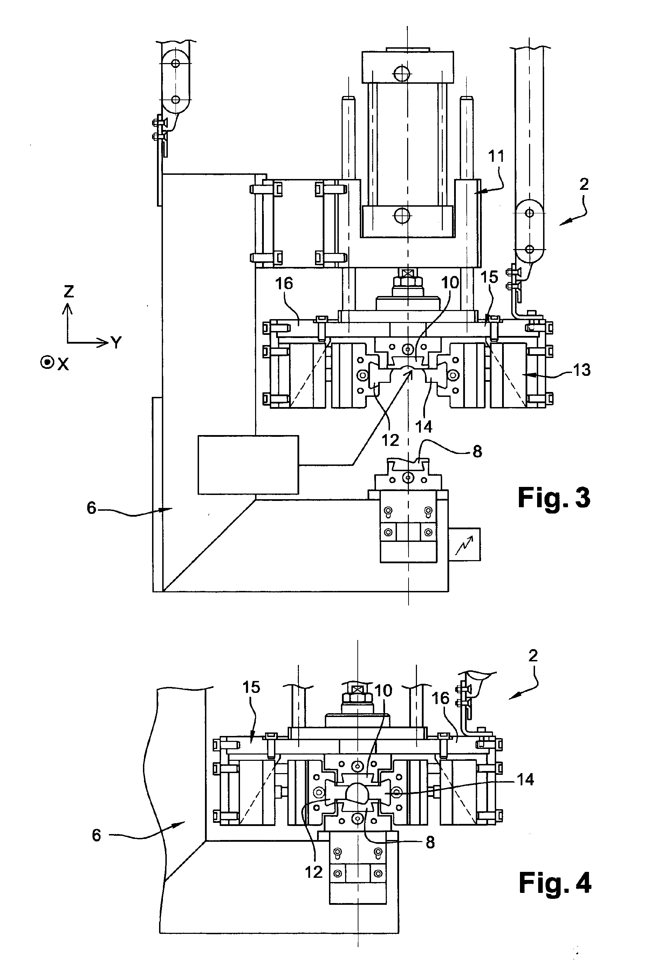

Nous allons tout d'abord décrire, en référence aux figures 3 à 9, la presse 2 du présent mode de réalisation de l'invention. La presse sert à la fabrication de tringles 4 intervenant elles-mêmes dans la réalisation d'ébauches crues de pneumatiques de véhicule, par exemple de type poids lourds.

La presse 2 comprend un bâti fixe 6. Elle est munie d'au moins trois mors qui sont en l'espèce au nombre de quatre. On distingue ainsi un mors inférieur 8, un mors supérieur 10, un mors latéral gauche 12 et un mors latéral droit 14.

En l'espèce, le mors inférieur 8 est fixé rigidement au bâti 6,

La presse comprend un équipage 15 monté mobile à coulissement par rapport au bâti suivant la direction verticale Z. L'équipage 15 comprend notamment un plateau 16 qui porte le mors supérieur 10 et les deux mors latéraux 12 et 14. Le mors supérieur 10 est rigidement fixé au plateau 16. Les deux mors latéraux 12 et 14 sont chacun montés mobiles à coulissement par rapport au plateau 16 suivant la direction Y et ce coaxialement l'un à l'autre. La presse comprend une unité de guidage pneumatique 11 assurant le déplacement du plateau 16 suivant la direction verticale par rapport au bâti, ainsi qu'une unité de guidage pneumatique 13 assurant le déplacement de chacun des mors latéraux par rapport au plateau 16.

Chacun des mors est monté de façon amovible par rapport au châssis afin de pouvoir être facilement démonté, remonté et, si besoin, remplacé. La presse comprend des moyens de chauffage de chaque mors, par exemple au moyen de cartouches électriques non illustrées. La presse est ainsi en mesure de maintenir chacun des mors à une température située par exemple entre 120 et 150°C.

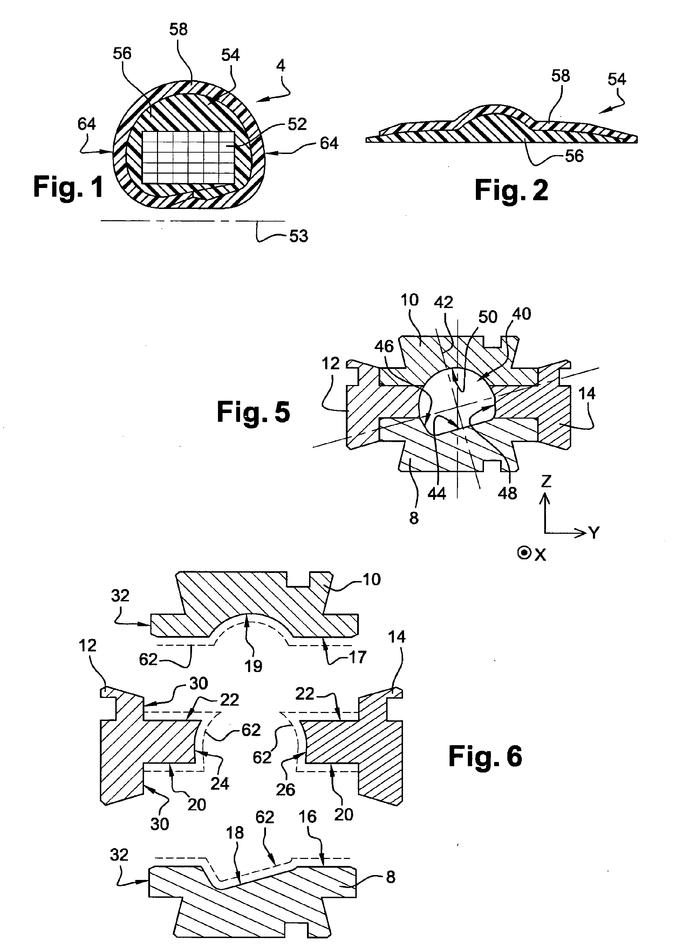

En référence notamment aux figures 5 et 6, chacun des mors inférieur 8 et supérieur 10 présente une face principale plane horizontale 16, 17 entamée dans une zone médiane par une face de mise en forme 18, 19. La face 16 du mors inférieur est orientée vers le haut tandis que la face 17 du mors supérieur est orientée vers le bas. Chacun des mors latéraux 12 et 14 présente une face plane horizontale inférieure 20 orientée vers le bas, ainsi qu'une face plane horizontale supérieure 22 orientée vers le haut. Les faces 16 et 20 sont en regard les unes des autres, de même que les faces 17 et 22. Les faces horizontales 16 et 20 sont agencées pour venir en contact surfacique mutuel au cours du fonctionnement de la presse et pour que chaque face 20 coulisse par rapport à la face 16 suivant la direction Y. Il en est de même pour les faces 17 et 22. Les faces horizontales 20 et 22 du mors latéral gauche sont limitées chacune vers la gauche par un épaulement 30 formant une butée pour des bords 32 du mors inférieur 8 et du mors supérieur 10 respectivement. Cette mise en butée marque donc la fin de la course du mors gauche 12 en direction de la droite. Le mors latéral droit 14 coopère de façon analogue avec des faces des mors inférieur et supérieur pour marquer la fin de la course vers la gauche du mors latéral droit 14.

Le mors latéral gauche 12 présente une face de mise en forme 24 délimitée vers le bas et vers le haut par les faces 20 et 22 avec lesquelles elle forme des arêtes. Il en est de même pour la face de mise en forme 26 du mors latéral droit 14 à l'égard des faces horizontales 20 et 22, Les faces de mise en forme 18 et 19 s'étendent en regard et à distance l'une de l'autre. Il en est de même pour les faces de mise en forme 24 et 26.

La presse est agencée de sorte que, en position fermée, lorsque les quatre mors sont dans la configuration illustrée à la figure 5 dans laquelle ils sont les plus proches les uns des autres, les quatre faces de mise en forme 18, 24, 19 et 26 forment dans cet ordre une succession continue fermée qui constitue une cavité 40 ouverte à ses deux extrémités axiales suivant la direction X, mais fermée dans un plan de section vertical quelconque parallèle aux directions Y et Z. La section dans ce plan n'est pas circulaire mais présente un axe de symétrie principal 42 incliné par rapport à chacune des directions Y et Z. La section présente notamment une base rectiligne 44, deux chanfreins 46 et 48 s'étendant à partir des extrémités de la base 44 ainsi qu'une voûte courbe concave 50 rejoignant les extrémités des chanfreins. La face de mise en forme 18 correspond au segment 44 et au chanfrein gauche 46. La voûte 50 est définie par les faces 24 et 19. La face 26 définit une fraction de la voûte ainsi que le chanfrein gauche 48.

Après leur usinage, chacun des mors est en l'espèce revêtu d'au moins une couche d'un revêtement antiadhésif 62 tel que celui commercialisé sous la référence FEP Xylan 8840/2618. Dans le présent exemple, on revêt chaque mors d'une couche primaire de ce produit après avoir porté le mors à une température d'au moins 120°C. Puis après avoir élevé sa température à 400°C, on applique une couche de finition du même produit. L'épaisseur totale des couches est comprise entre 20 et 30 microns. Les couches s'étendent sur les faces 16, 20, 22 et 17 pour faciliter leur glissement l'une sur l'autre ainsi que sur les faces de mise en forme.

Le procédé selon l'invention est ici mis en oeuvre de la façon suivante.

On suppose qu'on a réalisé une tringle annulaire telle qu'illustrée à la figure 1, l'anneau présentant un axe principal 53. La tringle comprend une armature centrale 52 formant le coeur de la section. Cette armature est formée de brins métalliques disposés côte à côte et empilés, et présente une forme générale de polygone, par exemple de quadrilatère et en l'espèce de rectangle. L'armature 4 est munie d'un revêtement 54 comprenant en l'espèce une couche interne de rembourrage 56 en contact avec l'armature et une couche externe d'habillage 58. En l'espèce, les deux couches forment un produit complexé co-extrudé et comprennent chacune de la gomme. Avant mise en place sur l'armature 52, le revêtement 54 s'étend à plat et présente une section ouverte illustrée à la figure 2. Lors de la mise en place, cette section est enroulée autour de la section de l'armature. Cette mise en place se fait en suivant la circonférence de l'armature, c'est-à-dire localement sa direction longitudinale. Les deux extrémités longitudinales du revêtement forment donc une zone de recouvrement mutuel suivant la direction circonférentielle.

Pour la mise en forme de cette zone de recouvrement, on procède comme suit.

La presse est initialement ouverte comme illustré à la figure 3, à savoir que l'équipage 16 est dans sa position la plus haute par rapport au mors inférieur 8. De plus, les mors latéraux 12 et 14 sont dans leur position la plus écartée l'un de l'autre et du mors supérieur 10. Les faces horizontales 22 et 17 sont en contact sur une fraction de leur longueur. Les faces horizontales 16 et 20 ne sont pas en contact.

On dispose la tringle 4 dans la presse 2 avec la zone de recouvrement sur le mors inférieur 8 et l'axe principal 53 parallèle à la direction Y.

On fait descendre l'équipage 15 pour presser la zone de recouvrement de la tringle entre les mors inférieur 8 et supérieur 10. On réalise un pressage de cette zone entre ces deux mors en comprimant le revêtement, ce qui provoque son fluage suivant la direction Y en direction des mors latéraux. Au cours de la descente, les faces horizontales 16 et 20 viennent en contact mutuel sur une fraction de leur surface,

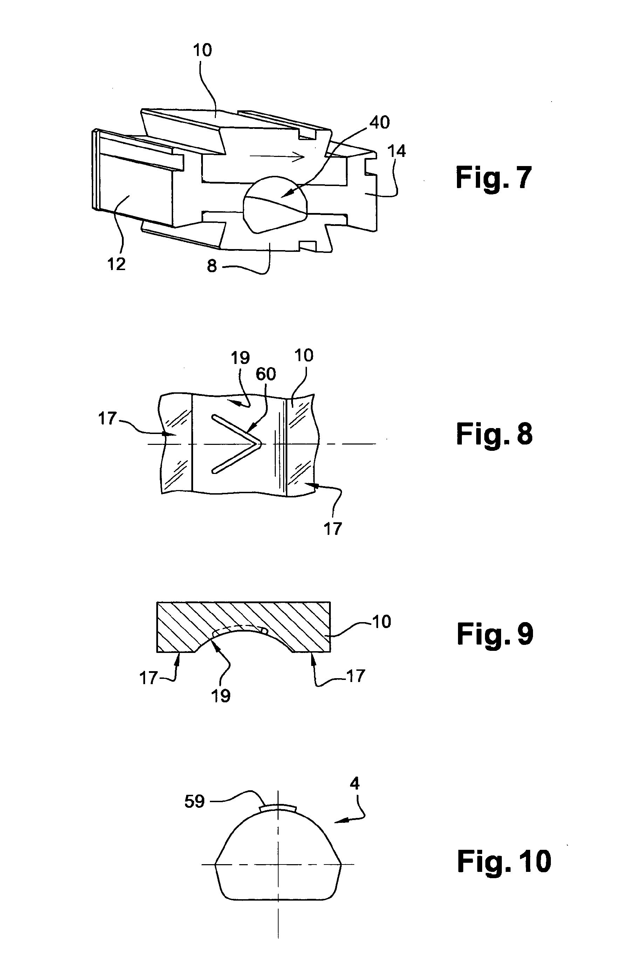

Ensuite, tout en maintenant les mors inférieur 8 et supérieur 10 en position, on approche l'un de l'autre les mors latéraux en les faisant coulisser suivant la direction Y. Au cours de ce mouvement, les faces 20 coulissent sur la face 16 en restant en contact surfacique avec ces dernières. Il en est de même pour les faces 22 à l'égard des faces 17. Les mors latéraux viennent donc en contact avec le revêtement qu'ils pressent entre eux. A compter de ce contact, la tringle se trouve pressée simultanément entre les quatre mors. A la fin du mouvement des mors, les quatre faces de mise en forme constituent la cavité 40 à section fermée dans laquelle est pressée et chauffée la zone de recouvrement entre les quatre mors, comme illustré aux figures 4, 5 et 7. La gomme est donc obligée de se répartir par fluage dans cette section pour prendre une forme mâle illustrée à la figure 10 correspondant à la forme femelle de la cavité 40. On maintient la pression pendant quelques secondes dans cette position afin que la gomme prenne sa place.

On procède ensuite à l'ouverture de la presse. Pour cela, on éloigne l'un de l'autre les mors latéraux 12 et 14, puis on remonte le plateau 16 qui emporte les deux mors latéraux et le mors supérieur 10. On peut ensuite ôter la tringle.

Après le pressage, la face inférieure plane de l'armature 52 est parallèle à la face inférieure de la section de la tringle définie par le segment 44. Le pressage à chaud permet également d'effectuer une soudure du revêtement sur lui-même au niveau de ses parties en recouvrement.

Comme illustré aux figures 8 et 9, l'un des mors, en l'espèce le mors supérieur 10, comprend une singularité géométrique sous la forme d'un relief ou d'une cavité. Il s'agit en l'espèce d'une cavité 60. Cette singularité a un positionnement et/ou une forme permettant de distinguer l'une de l'autre les deux faces axiales 64 de la tringle à l'issue de la mise en forme de la zone de recouvrement. Ces faces 64 sont perpendiculaires à l'axe 53. En l'espèce, la cavité 60 a une forme en « V », l'axe de symétrie du « V » étant parallèle à la direction Y. La cavité 60 s'étend dans la partie la plus haute de la face de mise en forme 19. Lors de la mise en oeuvre du procédé, elle permet de réaliser, au sommet de la section de la zone de recouvrement, une marque 59 en « V » en relief. Cette marque permettra à l'opérateur de placer la tringle dans l'ébauche crue du pneumatique avec une orientation prédéterminée de ses faces axiales 64.

L'invention est applicable à la fabrication des pneumatiques pour des roues de véhicules de type léger, poids lourds ou génie civil.

Bien entendu, on pourra apporter à l'invention de nombreuses modifications sans sortir du cadre de celle-ci.

On peut envisager de doter la presse de trois mors seulement.

On pourra modifier les mouvements des mors, notamment leur direction et leur ordre de mouvement.

## Revendications

1. Procédé de fabrication d'une tringle (4) destinée à la réalisation d'un pneumatique, **caractérisé en ce que**, la tringle comprenant un revêtement (54) formant une zone de recouvrement sur lui-même selon une direction circonférentielle de la tringle, on presse la tringle au moyen d'au moins trois mors (8, 10, 12, 14) en contact avec tout un périmètre d'une section de la zone.

2. Procédé selon la revendication précédente dans lequel le nombre de mors est d'au moins quatre.

3. Procédé selon au moins l'une quelconque des revendications précédentes dans lequel on presse tout d'abord la tringle au moyen de deux des mors opposés l'un à l'autre, de préférence des mors inférieur (8) et supérieur (10), pendant qu'on maintient deux autres des mors, de préférence des mors latéraux (12, 14), à distance de la tringle.

4. Procédé selon la revendication précédente dans lequel, après le pressage entre les deux mors opposés (8, 10), on les immobilise par rapport à la tringle et on approche les deux autres mors (12, 14) de la tringle.

5. Procédé selon au moins l'une quelconque des revendications 3 et 4, dans lequel, après le pressage entre les deux mors opposés (8, 10), on presse la tringle au moyen de tous les mors.

6. Procédé selon au moins l'une quelconque des revendications précédentes dans lequel, lors du pressage, on réalise une marque (59) sur la tringle, permettant de différencier l'une de l'autre deux faces axiales (64) de la tringle.

7. Procédé selon au moins l'une quelconque des revendications précédentes dans lequel la tringle comprend une armature (52) à section de forme polygonale.

8. Procédé selon au moins l'une quelconque des revendications précédentes dans lequel le revêtement (54) comprend une couche de rembourrage (56) et une couche d'habillage (58).

9. Presse (2) pour une tringle (4) destinée à la réalisation d'un pneumatique, **caractérisée en ce que** la presse comprend au moins trois mors (8, 10, 12, 14) montés mobiles les uns par rapport aux autres et aptes à former entre eux une cavité (40) à section fermée.

10. Presse selon la revendication précédente qui comprend un mors supérieur (10), un mors inférieur (8) et deux mors latéraux (12, 14).

11. Presse selon au moins l'une quelconque des revendications 9 et 10, qui comporte un équipage (15) monté mobile par rapport à l'un des mors, de préférence un mors inférieur (8), et portant les autres mors.

12. Presse selon la revendication précédente, dans laquelle, au sein de l'équipage (15), deux des mors agencés pour presser la tringle entre eux, de préférence des mors latéraux (12, 14), sont montés mobiles par rapport au troisième (10).

13. Presse selon au moins l'une quelconque des revendications 9 à 12 dans laquelle les mors sont montés mobiles à coulissement par rapport à un bâti (6) de la presse, et la cavité (40) a une section présentant un axe de symétrie principal (42) incliné par rapport à des directions de coulissement (Y, Z) des mors.

14. Presse selon au moins l'une quelconque des revendications 9 à 13 dans laquelle chaque mors (8, 10, 12, 14) est revêtu d'au moins une couche antiadhésive (62).

15. Presse selon au moins l'une quelconque des revendications 9 à 14, qui comprend des moyens de chauffage des mors (8, 10, 12, 14).

## Patentansprüche

1. Verfahren zur Herstellung eines Wulstrings (4), der zur Herstellung eines Reifens bestimmt ist, **dadurch gekennzeichnet, dass** man den Wulstring, der eine Beschichtung (54) aufweist, die eine Abdeckungszone auf sich selbst entlang einer umfänglichen Richtung des Wulstrings bildet, mit Hilfe von mindestens drei Spannbacken (8, 10, 12, 14) in Berührung mit einem gesamten Umfang eines Querschnitts der Zone presst.

2. Verfahren nach dem vorhergehenden Anspruch, bei dem die Anzahl von Spannbacken mindestens vier beträgt.

3. Verfahren nach mindestens einem der vorhergehenden Ansprüche, bei dem man zuerst den Wulstring mittels zwei einander gegenüberliegenden Spannbacken, vorzugsweise der unteren Spannbacke (8) und der oberen Spannbacke (10) presst, während man zwei andere der Spannbacken, vorzugsweise seitliche Spannbacken (12, 14), von dem Wulstring entfernt hält.

4. Verfahren nach dem vorhergehenden Anspruch, bei dem man nach dem Pressen zwischen den zwei gegenüberliegenden Spannbacken (8, 10) diese in Bezug auf den Wulstring blockiert und die zwei anderen Spannbacken (12, 14) dem Wulstring nähert.

5. Verfahren nach mindestens einem der Ansprüche 3 und 4, bei dem man nach dem Pressen zwischen den zwei gegenüberliegenden Spannbacken (8, 10) den Wulstring mittels aller Spannbacken presst.

6. Verfahren nach mindestens einem der vorhergehenden Ansprüche, bei dem man beim Pressen eine Markierung (59) auf dem Wulstring herstellt, die es erlaubt, die beiden axialen Seiten (64) des Wulstrings voneinander zu unterscheiden.

7. Verfahren nach mindestens einem der vorhergehenden Ansprüche, bei dem der Wulstring eine Bewehrung (52) mit vieleckig geformtem Querschnitt aufweist.

8. Verfahren nach mindestens einem der vorhergehenden Ansprüche, bei dem die Beschichtung (54) eine Polsterungsschicht (56) und eine Verkleidungsschicht (58) aufweist.

9. Presse (2) für einen Wulstring (4), die zum Herstellen eines Reifens bestimmt ist, **dadurch gekennzeichnet, dass** die Presse mindestens drei Spannbacken (8, 10, 12, 14) aufweist, die zueinander beweglich montiert sind und geeignet sind, um dazwischen einen Hohlraum (40) mit geschlossenem Querschnitt zu bilden.

10. Presse nach dem vorhergehenden Anspruch, die eine obere Spannbacke (10), eine untere Spannbacke (8) und zwei seitliche Spannbacken (12, 14) aufweist.

11. Presse nach mindestens einem der Ansprüche 9 und 10, die eine Ausrüstung (15) aufweist, die in Bezug auf eine der Spannbacken, vorzugsweise eine untere Spannbacke (8), beweglich montiert ist und die anderen Spannbacken trägt.

12. Presse nach dem vorhergehenden Anspruch, bei der innerhalb der Ausrüstung (15) zwei der Spannbacken, die eingerichtet sind, um den Wulstring dazwischen zu pressen, vorzugsweise seitliche Spannbacken (12, 14), in Bezug auf die dritte Spannbacke (10) beweglich montiert sind.

13. Presse nach mindestens einem der Ansprüche 9 bis 12, bei der die Spannbacken in Bezug auf einen Aufbau (6) der Presse gleitend beweglich montiert sind und der Hohlraum (40) einen Querschnitt hat, der eine Hauptsymmetrieachse (42) aufweist, die in Bezug auf Gleitrichtungen (Y, Z) der Spannbacken schräg ist.

14. Presse nach mindestens einem der Ansprüche 9 bis 13, bei der jede Spannbacke (8, 10, 12, 14) mit mindestens einer Antihaftschicht (62) beschichtet ist.

15. Presse nach mindestens einem der Ansprüche 9 bis 14, die Mittel zum Beheizen der Spannbacken (8, 10, 12, 14) aufweist.

## Claims

1. Method for manufacturing a bead wire (4) intended for producing a tyre, **characterized in that**, with the bead wire comprising a coating (54) that forms a region that overlaps itself in a circumferential direction of the bead wire, the bead wire is pressed using at least three jaws (8, 10, 12, 14) in contact with an entire perimeter of a section of the region.

2. Method according to the preceding claim, in which the number of jaws is at least four.

3. Method according to at least one of the preceding claims, in which the bead wire is pressed first of all by means of two mutually opposed jaws, preferably lower (8) and upper (10) jaws, while two more of the jaws, preferably lateral jaws (12, 14) are held away from the bead wire.

4. Method according to the preceding claim in which, after the pressing between the two opposed jaws (8, 10), these are immobilized with respect to the bead wire and the other two jaws (12, 14) are brought in closer to the bead wire.

5. Method according to at least any one of Claims 3 and 4, in which after pressing between the two opposed jaws (8, 10), the bead wire is pressed using all the jaws.

6. Method according to at least any one of the preceding claims, in which, during pressing, a mark (59) is made on the bead wire so that the two axial faces (64) of the bead wire can be differentiated from one another.

7. Method according to at least any one of the preceding claims, in which the bead wire comprises a reinforcement (52) of polygonal cross section.

8. Method according to at least any one of the preceding claims, in which the coating (54) comprises a padding layer (56) and a cladding layer (58).

9. Press (2) for a bead wire (4) intended for producing a tyre, **characterized in that** the press comprises at least three jaws (8, 10, 12, 14) mounted with the ability to move relative to one another and able to form between them a closed-section cavity (40).

10. Press according to the preceding claim which comprises an upper jaw (10), a lower jaw (8) and two lateral jaws (12, 14).

11. Press according to at least either one of Claims 9 and 10, which comprises gear (15) mounted with the ability to move with respect to one of the jaws, preferably a lower jaw (8), and which bears the other jaws.

12. Press according to the preceding claim in which, within the gear (15), two of the jaws arranged to press the bead wire between them, preferably lateral jaws (12, 14), are mounted with the ability to move relative to the third one (10).

13. Press according to at least any one of Claims 9 to 12 in which the jaws are mounted with the ability to move in a sliding manner with respect to a frame (6) of the press, and the cavity (40) has a cross section exhibiting a main axis of symmetry (42) that is inclined with respect to directions (Y, Z) in which the jaws slide.

14. Press according to at least any one of Claims 9 to 13 in which each jaw (8, 10, 12, 14) is coated with at least one nonstick layer (62).

15. Press according to at least any one of Claims 9 to 14, which comprises means of heating the jaws (8, 10, 12, 14).
